# EUROPEAN PATENT APPLICATION

(11) **EP 4 625 646 A1**
(43) Date of publication of application: **01.10.2025**
(21) Application number: 24166904.3
(22) Date of filing: 27.03.2024
(51) Int. Cl.: H01M 50/209, H01M 50/249, H01M 50/291, H01M 50/51, H01M 50/516, H01M 50/548, H01M 50/553

(54) **AN ENERGY STORAGE SYSTEM COMPRISING A PLURALITY OF BATTERY CELLS**

(71) Applicant: VOLVO TRUCK CORPORATION, 405 08 Göteborg (SE)
(72) Inventor: Lindelöw, Fredrik, 541 94 Skövde (SE); Jonsson, Kasper, 417 57 Göteborg (SE); Irannezhad, Mike, 413 30 Göteborg (SE)
(74) Representative: Valea AB

(57) **Abstract**

An energy storage system (4) comprising a plurality of battery cells (6), wherein the battery cells each comprise a first side (8) and a second side (10), opposite to the first side, each comprising a battery terminal (12), and wherein the battery cells extend along a central axis (c) extending therebetween. The energy storage system extending along a first axis (x), a second axis (y), and a third axis (z), the axes being perpendicular to each other, and comprising a first group (18) and a second group (20) of battery cells, each comprising a plurality of battery cells arranged along the second axis, the central axes of the battery cells parallel with the first axis. Wherein the first group and the second group are arranged such the first sides of the battery cells of the first group face the second sides of the battery cells of the second group, and the battery terminals of the facing sides are configured to be electrically coupled.

## Description

### TECHNICAL FIELD

The disclosure relates generally to an energy storage system. In particular aspects, the disclosure relates to an energy storage system comprising a plurality of battery cells. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The dimensions of an energy storage system are sometimes highly constrained. For example, sometimes it may be necessary for an energy storage system to have a flat shape, such that a length and a width extension of the energy storage system are significantly greater than a height extension. Therefore, there is a need to develop improved technology relating to energy storage systems.

### SUMMARY

According to a first aspect of the disclosure, there is provided an energy storage system comprising a plurality of battery cells. The battery cells each comprise a first side and a second side opposite to the first side. Each of the first side and the second side comprises a battery terminal. The battery cells extend along a central axis extending between the first side and the second side. The energy storage system having a first extension along a first axis, a second extension along a second axis and a third extension along a third axis, the first, second and third axes being perpendicular to each other. The energy storage system comprises a first group of battery cells and a second group of battery cells, each comprising a plurality of battery cells arranged along the second axis such that the central axes of each of the battery cells is parallel with the first axis. The first group and the second group are arranged such that each of the first sides of the battery cells of the first group faces one of the second sides of the battery cells of the second group, and wherein the battery terminals of the facing sides are configured to be electrically coupled.

The first extension along the first axis may correspond to the length of the energy storage system, the second extension along the second axis may correspond to a depth of the energy storage system, and the third extension along the third axis may correspond to the height of the energy storage system. The battery terminals of the facing sides being configured to be electrically coupled may mean that the facing sides may comprise opposite polarity terminals, i.e., one of the facing sides comprises a positive terminal, and the other of the facing sides comprises a negative terminal.

The first aspect of the disclosure may seek to in at least some cases provide an energy storage system meeting constraints in the third axis. A technical benefit may include the volumetric efficiency of the energy storage system in the third axis can be increased. For example, by providing an energy storage system having a first group and a second group each comprising a plurality of battery cells arranged in the depth extension, wherein the first group and the second group are arranged in the length direction, the extension of the energy storage system in the height direction may be minimized. By minimizing the extension of the energy storage system in the height direction the volumetric efficiency of the energy storage system in the height extension may be increased, and in at least some cases an energy storage system may meet constraints in the height extension.

Optionally in some examples, including in at least one preferred example, the energy storage system comprises at least one structural element configured to abut with at least one of the battery cells. By abutting with the at least one structural element, movement of the at least one battery cell may be delimited. A technical benefit may include that a battery cell may be more easily positioned.

Optionally in some examples, including in at least one preferred example, the at least one structural element comprises at least one central structural element configured to extend at least partially between the first group and the second group, and to abut with at least one of the battery cells, such that movement of at least one of the battery cells along the first axis is delimited. A technical benefit may include that a battery cell may be more easily positioned along the first axis.

Optionally in some examples, including in at least one preferred example, the central structural elements is/are configured to extend between at least one battery cell of the first group and at least one battery cell of the second group such that movement of the at least one battery cell of the first group and the at least one battery cell of the second group along the first axis is delimited. A technical benefit may include that a battery cell of the first group and a battery cell of the second group may be more easily positioned along the first axis by a single element.

Optionally in some examples, including in at least one preferred example, the central structural elements is/are configured to abut with at least one of the battery cells of the first group and/or the second group such that movement of each of the battery cells of the first group and/or the second group is constrained along the first axis. Optionally in some examples, at least one of the battery cells of the first group and/or the second group may be fixed to at least one other battery cell of the same group, such that relative movement between the battery cells is constrained along the first axis. In at least some examples, the battery cells may be fixed by a friction acting between the surfaces of the battery cells, or by abutting elements of the battery cells. Alternatively, the battery cells of the first group and/or the second group may be fixed to one another by tying, fastening, with screws, bolts, etc., welding, bonding, for example with adhesive, or any known means. A technical benefit may include that at least some of the battery cells of the first group and/or the second group may be more easily positioned without having to abut with a central structural element. In such examples the total volume of the central structural elements may then be reduced, thus reducing the weight of the energy storage system, as well as the material costs.

Optionally in some examples, including in at least one preferred example, the at least one structural element comprises at least one side structural element configured to abut at least one of the battery cells such that movement of the at least one battery cell is constrained along the second axis. A technical benefit may include that a battery cell may be more easily positioned along the second axis.

Optionally in some examples, including in at least one preferred example, the side structural elements is/are arranged adjacent to each of the battery cells such that movement of the battery cells along the second axis is delimited. Optionally in some examples, at least one of the side structural elements may comprise a side wall. A technical benefit may include that each of the battery cells may be more easily positioned along the second axis. In at least some examples the battery cells may be arranged along the second axis such that adjacent battery cells do not contact one another. A technical benefit may include in at least some examples improved cooling of the battery cells.

Optionally in some examples, including in at least one preferred example, the battery cells of the first group and the second group are configured to be stacked along the second axis, and the side structural elements is/are arranged adjacent to the first group and/or the second group such that movement of the first group and/or the second group along the second axis is delimited. By being stacked along the second axis the battery cells may support one another along the second axis, i.e., the battery cells contact one another via surfaces facing in a direction extending in the second axis, or alternatively the battery cells may be stacked having elements therebetween, such as cooling plates, insulators, etc. A technical benefit may include that all of the battery cells of the first group and/or the second group may together be more easily positioned along the second axis.

Optionally in some examples, including in at least one preferred example, the energy storage system comprises a structural plate, extending in the first axis and the second axis and configured to support each of the plurality of battery cells. A technical benefit may include that the battery cells may be supported along the third axis.

Optionally in some examples, including in at least one preferred example, the at least one structural element is configured to be fixed to the structural plate. The at least one structural element may be fixed to the structural plate by welding, adhesive, fasteners, such as screws, bolts clamps, etc., or any known method of fixation. A technical benefit may include in at least some examples that complexity of the structural plate may be reduced.

Optionally in some examples, including in at least one preferred example, the at least one structural element is integrally formed with the structural plate. A technical benefit may include in at least some examples that assembly of the energy storage system may be simplified.

Optionally in some examples, including in at least one preferred example, the structural plate comprises a cooling plate configured to be in thermal communication with the plurality of battery cells. A technical benefit may include that cooling of the battery cells may be improved.

Optionally in some examples, including in at least one preferred example, a thermally conductive material is applied between the cooling plate and the plurality of battery cells. A technical benefit may include that cooling of the battery cells may be improved.

Optionally in some examples, including in at least one preferred example, the battery cells comprise prismatic battery cells.

Optionally in some examples, including in at least one preferred example, the battery terminals are electrically coupled by welding.

Optionally in some examples, including in at least one preferred example, the battery terminals of the first sides of the battery cells of the first group and/or the battery terminals of the second sides of the battery cells of the second group comprise an electrically conductive ribbon, configured to extend in the first axis. A technical benefit may include in at least some examples that the ease with which the battery terminals are coupled may be improved. Furthermore, when the battery cells are electrically coupled the electrically conductive ribbon(s) may allow for a relative movement to occur between the battery cells without loss of the electrical coupling.

Optionally in some examples, including in at least one preferred example, the battery terminals of the first side of the battery cells of the first group and the battery terminals of the second side of the battery cells of the second group are configured to be connected via at least one bus bar. A technical benefit may include in at least some examples a reduced assembly time.

Optionally in some examples, including in at least one preferred example, the battery terminals of the first sides of the battery cells of the first group and the battery terminals of the second sides of the battery cells of the second group are configured to abut. A technical benefit may include in at least some examples, the number of parts in the energy storage system may be reduced, such that the total weight of the battery pack may be reduced. Additionally in at least some examples the energy storage system may be more easily assembled.

Optionally in some examples, including in at least one preferred example, the second side of the battery cells of the first group and the first side of the battery cells of the second group comprise vents. In at least some examples, for example where the energy storage system comprises a structural plate comprising a cooling plate, a technical benefit may include that hot gases may be expelled from the battery cells in a direction away from the cooling plate.

Optionally in some examples, including in at least one preferred example, the energy storage system comprises a third group of battery cells, comprising a plurality of battery cells stacked along the second axis such that the central axes of each of the battery cells is parallel with the first axis, wherein the third group is arranged such that each of the first sides of the battery cells of the second group faces one of the second sides of the battery cells of the third group, and wherein the battery terminals of the facing sides are configured to be electrically coupled. A technical benefit may include that the capacity of the energy storage system may be increased without increasing the extension in the third direction.

According to a second aspect of the disclosure, there is provided a vehicle comprising the energy storage system according to any one of the examples of the first aspect of the disclosure. The second aspect of the disclosure may seek to provide a vehicle having an energy storage system meeting constraints in the third axis. A technical benefit may include that the volumetric efficiency of the energy storage system of a vehicle in the third axis can be increased.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2a** is an exemplary energy storage system according to an example.
**FIG. 2b** is an additional view of the exemplary energy storage system according to the example of **FIG. 2a****.**
**FIG. 2c** is an additional view of the exemplary energy storage system according to the example of **FIG. 2a****.**
**FIG. 3a** is a view of an exemplary energy storage system according to an example.
**FIG. 3b** is an additional view of the exemplary energy storage system according to the example of **FIG. 3a****.**
**FIG. 3c** is an additional view of the exemplary energy storage system according to the example of **FIG. 3a****.**
**FIG. 4a** is an exemplary energy storage system according to an example.
**FIG. 4b** is an additional view of the exemplary energy storage system according to the example of **FIG. 4a****.**
**FIG. 5** is a view of an exemplary energy storage system according to an example.
**FIG. 6** is a view of an exemplary energy storage system according to an example.
**FIG. 7** is a view of an exemplary energy storage system according to an example.
**FIG. 8** is another view of **FIG. 2a****,** according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

The dimensions of an energy storage system are sometimes highly constrained. For example, sometimes it may be necessary for an energy storage system to have a flat shape, such that a length and a depth extension of the energy storage system are significantly greater than a height extension. For example, an energy storage system may be installed under the floor of the vehicle such that a height extension of the energy storage system is restricted. Therefore, there is a need to develop improved technology relating to energy storage systems. For example, by providing an energy storage system having a first group and a second group each comprising a plurality of battery cells arranged in, the depth extension, wherein the first group and the second group are arranged in the length direction the extension of the energy storage system in the height direction may be minimized, such that in at least some cases an energy storage system may meet constraints in the height extension.

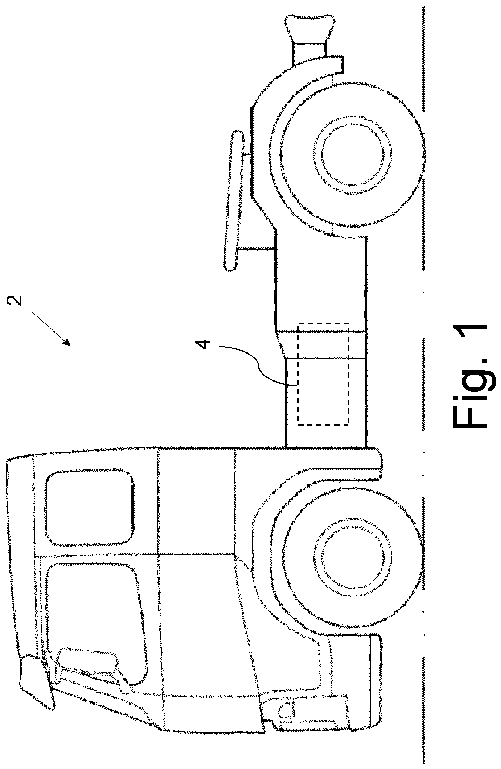

**FIG. 1** is an exemplary vehicle 2 according to an example, in the form of a truck 2. Whilst the shown aspect comprises a truck 2, the vehicle may comprise any type of vehicle such as a car, bus, industrial vehicle, marine vessel, aircraft, etc.

The vehicle 2 comprises an energy storage system 4. The energy storage system 4 may comprise an energy storage as means for propulsion, for example in an electric vehicle. Alternatively, the energy storage system 4 may comprise an energy storage as means for auxiliary functions of the vehicle 2.

Furthermore, the energy storage system 4 may be used for non-vehicle applications, for example a stationary installation.

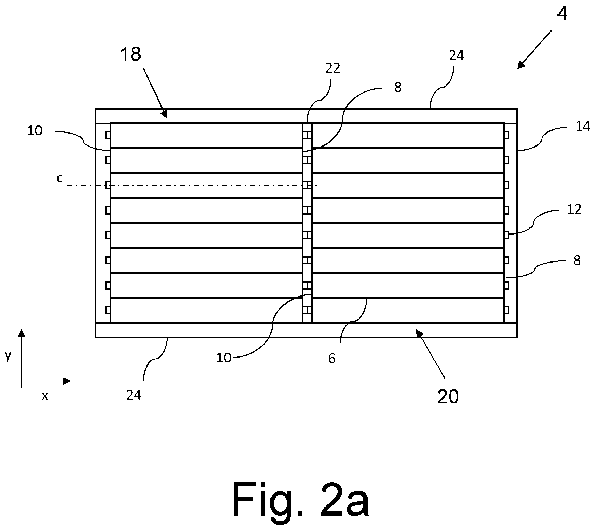

**FIG. 2a** is an exemplary energy storage system 4 according to an example. The energy storage system 4 comprises a plurality of battery cells 6, wherein the battery cells 6 each comprise a first side 8 and a second side 10 opposite to the first side 8. In the shown example the first side 8 and the second side 10 are parallel, alternatively, in at least some examples the first side 8 and the second side 10 may be inclined with respect to one another. In the shown example the battery cells 6 comprise prismatic battery cells 6. Furthermore, in the shown example the battery cells 6 comprise a rectangular cross-sectional shape, such that the first side 8 and the second side 10 each comprise a rectangular cross-sectional shape, and wherein four surfaces extend between the first side 8 and the second side 10. Alternatively, in at least some examples the battery cells 6 may comprise a circular cross-sectional shape, or any cross-sectional shape.

Each of the first side 8 and the second side 10 comprises a battery terminal 12. The battery terminals 12 may comprise opposite polarity terminals. The battery cells 6 extend along a central axis c extending between the first side 8 and the second side 10, the energy storage system 4 having a first extension along a first axis x, a second extension along a second axis y and a third extension along a third axis z, the first, second and third axes x, y, z being perpendicular to each other.

The energy storage system 4 comprises a first group 18 of battery cells 6 and a second group 20 of battery cells 6, each comprising a plurality of battery cells 6 arranged along the second axis y such that the central axes c of each of the battery cells 6 is parallel with the first axis x. In the shown example the first group 18 and the second group 20 are stacked along the second axis y. By being stacked along the second axis y the battery cells 6 may support one another along the second axis y. In the shown example the battery cells 6 contact one another via surfaces facing in a direction extending in the second axis y. Alternatively, in at least some examples the battery cells 6 may be stacked having elements therebetween, such as cooling plates, insulators, etc.

The first group 18 and the second group 20 are arranged such that each of the first sides 8 of the battery cells 6 of the first group 18 faces one of the second sides 10 of the battery cells 6 of the second group 20, and wherein the battery terminals 12 of the facing sides are configured to be electrically coupled. By having the first sides 8 of the battery cells 6 of the first group 18 facing one of the second sides 10 of the battery cells 6 of the second group 20 the battery terminals 12 may be more easily electrically coupled. In the shown example the central axes c of the battery cells 6 which are facing each other are coincident. Alternatively, in at least some examples the central axes c of the battery cells 6 which are facing each other may be extending parallel, but spaced apart along the second axis y, as long as at least a portion the sides 8 of the battery cells 6 are facing. In the shown example the battery terminals 12 are located on the central axis c of the battery cells 6. Alternatively, in at least some examples the battery terminals 12 may be offset from the central axis c. For example, in at least some examples the battery terminals 12 of the facing sides may be spaced from one another in the second axis y and/or the third axis z such that the extension of battery terminals 12 in the first direction x may overlap, thus it may be possible, in at least some examples, to reduce the spacing between the facing sides.

In the shown example the energy storage system 4 comprises at least one structural element 22, 24 configured to abut with at least one of the battery cells 6. Furthermore, in the shown example the at least one structural element 22, 24 comprises at least one central structural element 22 configured to extend at least partially between the first group 18 and the second group 20, and to abut with at least one of the battery cells 6, such that movement of at least one of the battery cells 6 along the first axis x is delimited.

In the shown example, the central structural element 22 is configured to extend between at least one battery cell 6 of the first group 18 and at least one battery cell 6 of the second group 20 such that movement of the at least one battery cell 6 of the first group 18 and the at least one battery cell 6 of the second group 20 along the first axis x is delimited.

Furthermore, in the shown example the central structural element 22 comprises a single element extending in the second axis y such that each of the battery cells 6 of the first group 18 and the second group 20 are configured to abut therewith such that movement of all of the battery cells 6 along the first axis x is delimited. In the shown example the central structural element 22 comprises a beam having a rectangular cross-sectional shape. Alternatively, in at least some examples the central structural element 22 may have any cross-sectional shape, for example the central structural element 22 may comprise cut-outs and/or protrusions for engaging with at least one battery cell 6.

In at least some examples the energy storage system 4 may comprise at least one peripheral structural element (not shown) configured to be located outer to the first group 18 and/or the second group 20 along the first axis x, and configured to abut with at least one of the battery cells 6 of the first group 18 or the second group 20, such that movement of at least one of the battery cells 6 along the first axis x is delimited.

In at least some examples the peripheral structural element(s) may comprise an element extending in the second axis y such that each of the battery cells 6 of the first group 18 or the second group 20 is configured to abut therewith such that movement of all of the battery cells 6 along the first axis x is delimited. In at least some examples the energy storage system 4 may comprise two peripheral structural elements, wherein the peripheral structural elements comprise a pair of end walls configured to delimit the extension of the energy storage system 4 along the first axis x.

Furthermore, in the shown example the at least one structural element 22, 24 comprises at least one side structural element 24 configured to abut at least one of the battery cells 6 such that movement of the at least one battery cell 6 is constrained along the second axis y.

In the shown example the side structural elements 24 are arranged adjacent to the first group 18 and the second group 20 such that movement of the first group 18 and the second group 20 along the second axis y is delimited. In the shown example the energy storage system 4 comprises two side structural elements 24, wherein the side structural elements 24 comprise a pair of side walls 24 configured to delimit the extensions of the energy storage system 4 along the second axis y.

As well as constraining movement of the battery cells 6, at least one structural element 22, 24 may be configured for absorbing impacts, acting as a load path during an impact, thermal dissipation, thermal insulation, providing an expansion space for swelling, etc.

In the shown example the energy storage system 4 comprises a structural plate 14, extending in the first axis x and the second axis y and configured to support each of the plurality of battery cells 6.

In the shown example the at least one structural element 22, 24 is configured to be fixed to the structural plate 14. The at least one structural element 22, 24 may be fixed to the structural plate 14 by welding, adhesive, fasteners, such as screws, bolts clamps, etc., or any known method of fixation.

In at least some examples the energy storage system 4 may comprise a further structural plate (not shown), extending in the first axis x and the second axis y and configured to support each of the plurality of battery cells 6 on a side opposite to that of the structural plate 14.

In at least some examples the structural plate 14 may comprise a cooling plate 14 configured to be in thermal communication with the plurality of battery cells 6. Furthermore, in at least some examples a thermally conductive material may be applied between the cooling plate 14 and the plurality of battery cells 6. In at least some examples a thermally conductive material may be applied between the first group 18 and the second group 20, such that thermal conductivity is provided around the terminals and the cells. The thermally conductive material may comprise a paste, adhesive, pad, tape, etc.

In at least some examples the battery terminals 12 may be electrically coupled by welding. The battery terminals may be welded by ultrasonic welding, resistance welding, soldering, or laser welding, or any known method of welding.

In the shown example the battery terminals 12 of the first sides 8 of the battery cells 6 of the first group 18 and the battery terminals 12 of the second sides 10 of the battery cells 6 of the second group 20 are configured to abut.

In at least some examples, during the assembly of the energy storage system 4 firstly at least one structural element 22, 24 is fixed to the structural plate 14 such that at least one of the battery cells 6 may be positioned on the structural plate 14, at a position such that the battery terminals 12 of the facing sides may be electrically coupled.

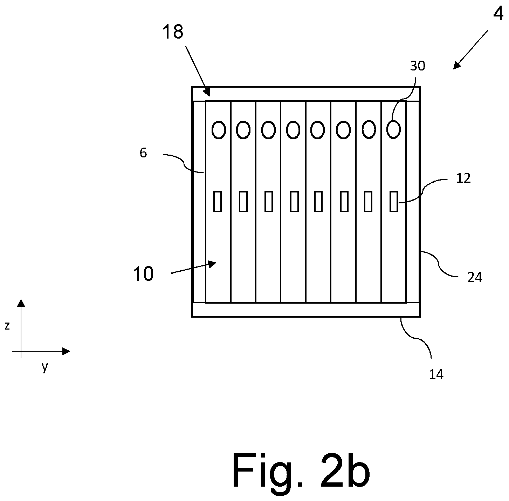

**FIG. 2b** is an additional view of the exemplary energy storage system 4 according to the example of **FIG. 2a****.** In the shown example the second side 10 of the battery cells 6 of the first group 18 comprise vents 30, furthermore the first side 8 of the battery cells 6 of the second group 20 may comprise vents (not shown). In at least some examples the vents 30 may connected to a gas conveying structure, which may for example comprise part of an end wall.

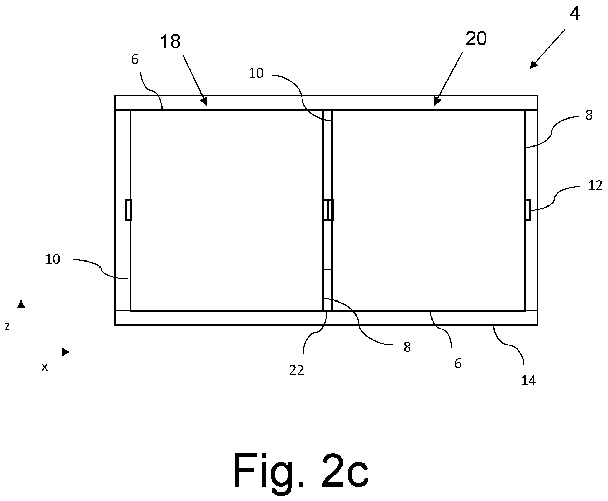

**FIG. 2c** is an additional view of the exemplary energy storage system 4 according to the example of **FIG. 2a****.** In the shown example the extension of the central structural member 22 in the third axis z is less than the extension of the battery cells in the third axis z. Furthermore, in the shown example the extension of the central structural member 22 in the third axis z is less than the position of the battery terminals 12 in the third axis z. In at least some examples a portion of the central structural member 22 may abut at least one of the battery terminals 12, such that the battery terminal 12 is supported by the central structural member 22. Furthermore, in at least some examples the central structural element 22 may comprise cut-outs and/or protrusions for engaging with at least one battery terminal 12.

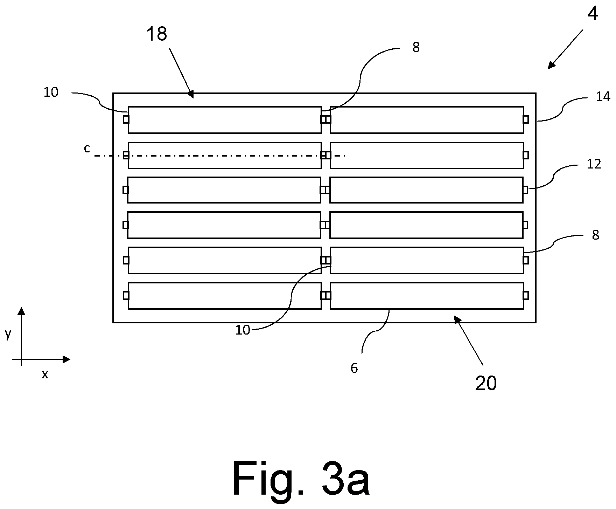

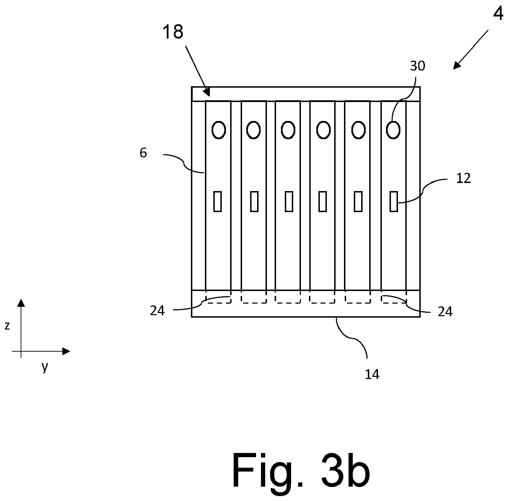

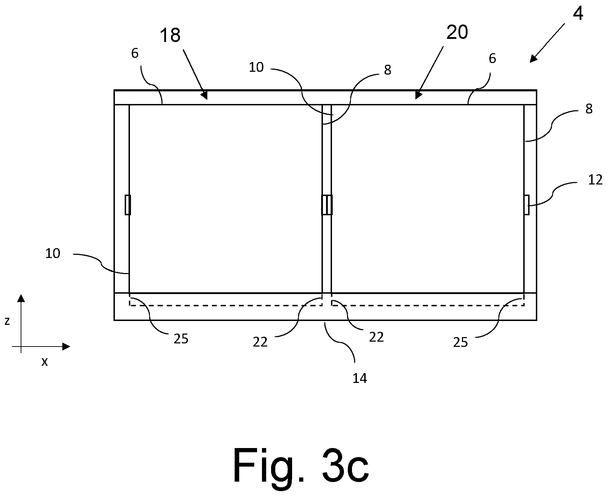

**FIG. 3a-3c** is a view of an exemplary energy storage system 4 according to an example. The shown example differs from that of **FIG. 2a** as the structural elements 22, 24 are not formed separately from the structural plate 14, instead, in the shown example the at least one structural element 22, 24, 25 is integrally formed with the structural plate 14.

In the shown example the structural elements 22, 24 comprise a plurality of central structural elements 22, side structural elements 24, and peripheral structural elements 25, wherein the structural elements 22, 24, 25 define a plurality of spaces for each of the battery cells 6 to be positioned. In the shown example the structural plate 14 is formed having a flat cuboidal shape wherein the spaces for the battery cells 6 are formed as a plurality of voids extending into the flat cuboidal shape. Alternatively, in at least some examples the structural plate 14 is formed having a flat cuboidal shape wherein the structural elements 22, 24, 25 protrude from the flat cuboidal shape. Furthermore, in at least some examples the structural plate 14 may be formed having any number of voids and/or protrusions such that the battery cells 6 may be accommodated. Furthermore, in at least some examples at least one of the structural elements 22, 24, 25 may be integrally formed with the structural plate 14, and another of the structural elements 22, 24, 25 may be fixed to the structural plate 14.

Additionally, in the shown example the side structural elements 24 are arranged adjacent to each of the battery cells 6 such that movement of the battery cells 6 along the second axis y is delimited. Furthermore, in the shown example the battery cells 6 of the first group 18 and the second group 20 arranged along the second axis y such that there is a space formed in between the adjacent battery cells 6. In at least some examples the space formed between the adjacent battery cells 6 may improve cooling of the battery cells 6. Cooling of the battery cells 6 may comprise ventilation, or alternatively a thermally conductive material may be applied between the adjacent battery cells 6.

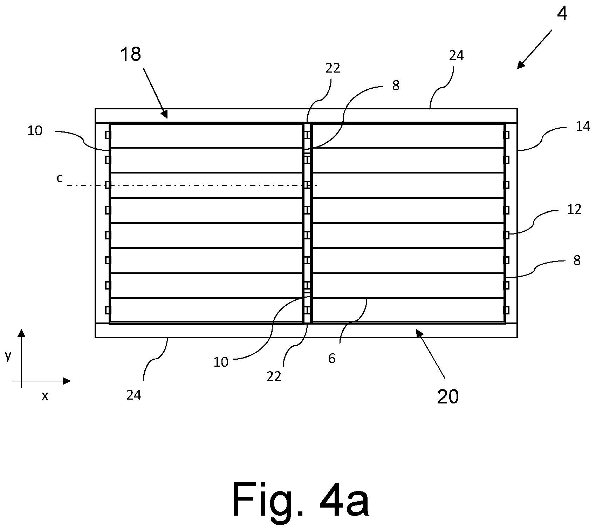

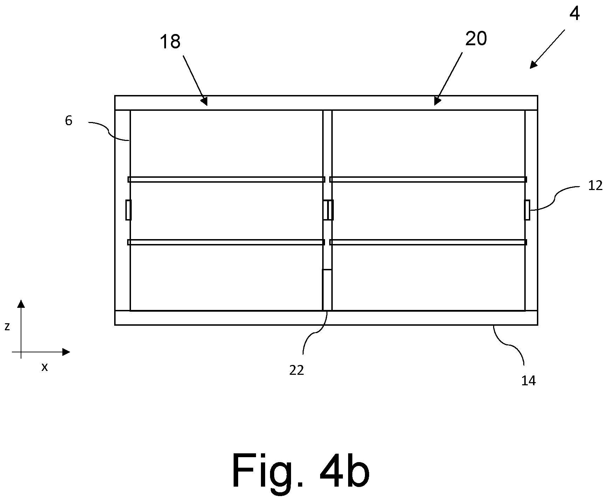

**FIG. 4a-4b** is an exemplary energy storage system 4 according to an example. The shown example differs from that of **FIG. 2a** as the central structural element 22 is not formed as a single element extending in the second axis y such that each of the battery cells 6 of the first group 18 and the second group 20 is configured to abut therewith. Instead in the shown example there are two central structural elements 22 wherein each of the central structural elements 22 are configured to abut with at least one of the battery cells 6 of the first group 18 and the second group 20 such that movement of each of the battery cells 6 of the first group 18 and the second group 20 is constrained along the first axis x. In at least some examples the energy storage system 4 comprises only one central structural element 22, or alternatively, in at least some examples the energy storage system 4 may comprise any number of central structural elements 22, for example three, four, five, etc. In the shown example each of the structural elements abuts with one battery cell 6 of the first group 18 and one battery cell 6 of the second group 20. In at least some examples the central structural elements 22 may abut only partially with at least one of the battery cells 6, furthermore the central structural elements 22 may abut with more than one battery cell 6 of the first group 18 and/or the second group 20.

Additionally in the shown example the battery cells 6 of the first group 18 and the battery cells 6 of the second group 20 are fixed to one another such that relative movement between the battery cells 6 is constrained along the first axis x. Therefore, the central structural elements 22, by constraining at least one of the battery cells 6, of the first group 18 and/or the second group 20, for movement along the first axis x, movement of all of the battery cells 6 may be constrained along the first axis x. In the shown example the battery cells 6 of the first group 18 and the battery cells 6 of the second group 18 are fixed to one another by tying. Alternatively, in at least some examples the battery cells 6 of the first group 18 and/or the second group 20 may be fixed to one another by fastening, with screws, bolts, etc., welding, bonding, for example with adhesive, or any known means. In at least some examples, the battery cells 6 may be fixed by a friction acting between the surfaces of the battery cells 6, or by abutting elements of the battery cells 6.

Where the battery cells 6 of the first group 18 and/or the battery cells 6 of the second group 20 are fixed to one another. In at least some examples by using fewer central structural elements 22 the weight of the energy storage system 4 may be reduced. Alternatively, in at least some examples, by using a plurality of central structural elements 22 a pressure which may be extended by the central structural elements on the battery cells 6 may be reduced.

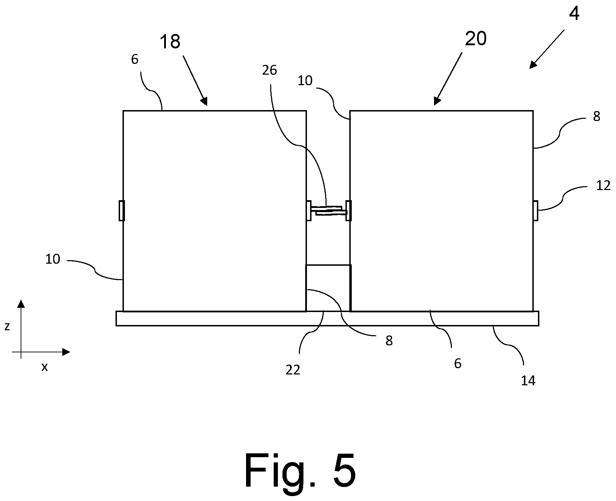

**FIG. 5** is a view of an exemplary energy storage system according to an example. The shown example differs from that of **FIG. 2a** as the battery terminals 12 of the first sides 8 of the battery cells 6 of the first group 18 and/or the battery terminals 12 of the second sides 10 of the battery cells 6 of the second group 20 comprise an electrically conductive ribbon 26, configured to extend in the first axis x.

In at least some examples only the battery terminals 12 of the first group 18 or the second group 20 may comprise an electrically conductive ribbon 26.

In at least some examples the electrically conductive ribbon 26 may be flexible.

The position of the electrically conductive ribbon(s) 26 may be easily adjusted, such that in at least some examples by the ease with which the battery terminals 12 are coupled may be improved. Furthermore, when the battery cells 6 are electrically coupled the electrically conductive ribbon(s) 26 may allow for a relative movement to occur between the battery cells 6 without loss of the electrical coupling.

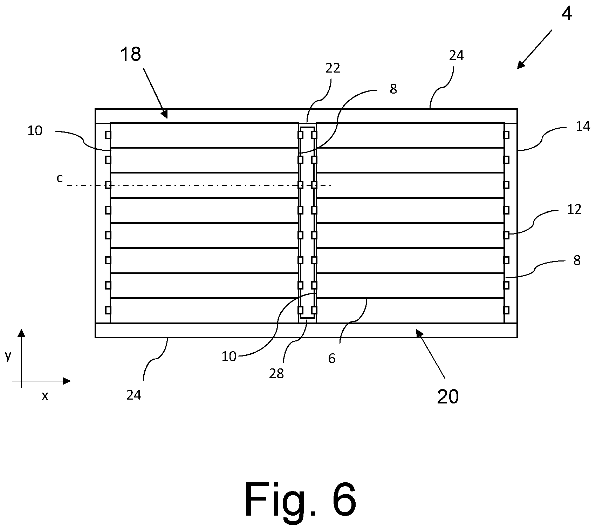

**FIG. 6** is a view of an exemplary energy storage system 4 according to an example. The shown example differs from that of **FIG. 2a** as the battery terminals 12 of the first side 8 of the battery cells 6 of the first group 18 and the battery terminals 12 of the second side 10 of the battery cells 6 of the second group 20 are configured to be connected via at least one bus bar 28. In the shown example the bus bar 28 is located at between the battery terminals 12 and the structural plate 14, along the third axis z. Furthermore, in at least some examples the bus bar 28 may be supported by the at least one central structural element 22. Alternatively, in at least some examples the bus bar 28 may be positioned such the battery terminals 12 are located between the bus bar 22 and the and the structural plate 14, along the third axis z. In the shown example all of the battery terminals 12 of the first side 8 of the battery cells 6 of the first group 18 and all of the battery terminals 12 of the second side 10 of the battery cells 6 of the second group 20 are connected via one bus bar 28. In at least some examples the battery terminals 12 of the facing sides may comprise the same polarity.

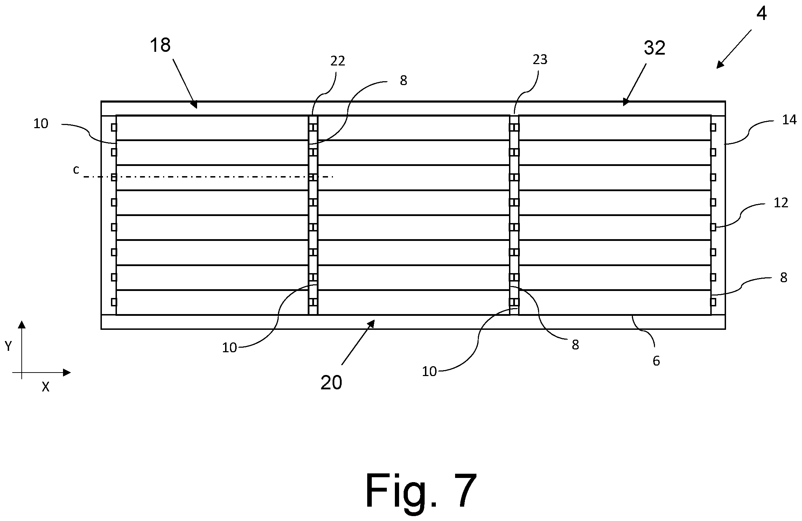

**FIG. 7** is a view of an exemplary energy storage system 4 according to an example. The shown example differs from that of **FIG. 2a** as the energy storage system 4 of **FIG. 7** further comprises a third group 32 of battery cells 6, comprising a plurality of battery cells 6 stacked along the second axis y such that the central axes c of each of the battery cells 6 is parallel with the first axis x, wherein the third group 32 is arranged such that each of the first sides 8 of the battery cells 6 of the second group 20 faces one of the second sides 10 of the battery cells 6 of the third group 32, and wherein the battery terminals 12 of the facing sides are configured to be electrically coupled.

In at least some examples the energy storage system 4 may comprise any number of battery groups arranged along the first axis x.

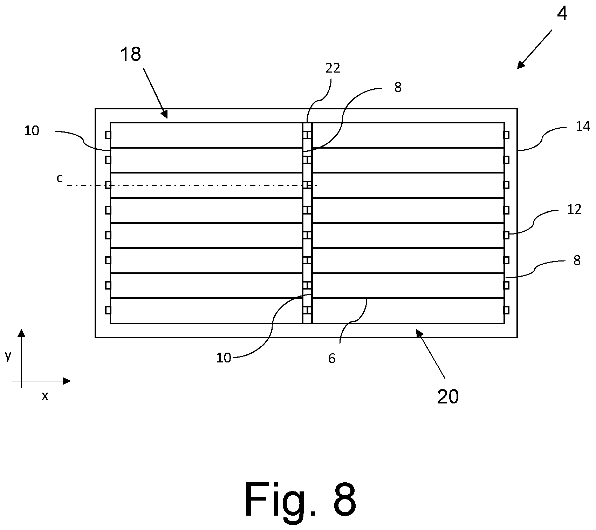

**FIG. 8** is another view of **FIG. 2a****,** according to an example. In the shown example an energy storage system 4 comprising a plurality of battery cells 6, wherein the battery cells 6 each comprise a first side 8 and a second side 10 opposite to the first side 8, wherein each of the first side 8 and the second side 10 comprises a battery terminal 12, and wherein the battery cells 6 extend along a central axis c extending between the first side and the second side, the energy storage system having a first extension along a first axis x, a second extension along a second axis y and a third extension along a third axis z, the first, second and third axes x, y, z being perpendicular to each other, and wherein the energy storage system 4 comprises a first group 18 of battery cells 6 and a second group 20 of battery cells 6, each comprising a plurality of battery cells 6 arranged along the second axis y such that the central axes c of each of the battery cells 6 is parallel with the first axis x, wherein the first group 18 and the second group 20 are arranged such that each of the first sides 8 of the battery cells 6 of the first group 18 faces one of the second sides 10 of the battery cells 6 of the second group 20, and wherein the battery terminals 12 of the facing sides are configured to be electrically coupled

In the following, possible features and feature combinations of the present disclosure are presented as a list of examples.

**Example 1:** An energy storage system 4 comprising a plurality of battery cells 6, wherein the battery cells 6 each comprise a first side 8 and a second side 10 opposite to the first side 8, wherein each of the first side 8 and the second side 10 comprises a battery terminal 12, and wherein the battery cells 6 extend along a central axis c extending between the first side 8 and the second side 10, the energy storage system 4 having a first extension along a first axis x, a second extension along a second axis y and a third extension along a third axis z, the first, second and third axes x, y, z being perpendicular to each other, and wherein the energy storage system 4 comprises a first group 18 of battery cells 6 and a second group 20 of battery cells 6, each comprising a plurality of battery cells 6 arranged along the second axis y such that the central axes c of each of the battery cells 6 is parallel with the first axis x, wherein the first group 18 and the second group 20 are arranged such that each of the first sides 8 of the battery cells 6 of the first group 18 faces one of the second sides 10 of the battery cells 6 of the second group 20, and wherein the battery terminals 12 of the facing sides are configured to be electrically coupled.

**Example 2:** The energy storage system 4 of example 1, comprising at least one structural element 22, 24 configured to abut with at least one of the battery cells 6.

**Example 3:** The energy storage system 4 of example 2, wherein the at least one structural element 22, 24 comprises at least one central structural element 22 configured to extend at least partially between the first group 18 and the second group 20, and to abut with at least one of the battery cells 6, such that movement of at least one of the battery cells 6 along the first axis x is delimited.

**Example 4:** The energy storage system 4 of example 3, wherein the central structural elements 22 is/are configured to extend between at least one battery cell 6 of the first group 18 and at least one battery cell 6 of the second group 20 such that movement of the at least one battery cell 6 of the first group 18 and the at least one battery cell 6 of the second group 20 along the first axis x is delimited.

**Example 5:** The energy storage system 4 of any of examples 3-4, wherein the central structural elements is/are configured to abut with at least one of the battery cells 6 of the first group 18 and/or the second group 20 such that movement of each of the battery cells 6 of the first group 18 and/or the second group 20 is constrained along the first axis x.

**Example 6:** The energy storage system 4 of any of examples 2-5, wherein the at least one structural element 22, 24 comprises at least one side structural element 24 configured to abut at least one of the battery cells 6 such that movement of the at least one battery cell 6 is constrained along the second axis y.

**Example 7:** The energy storage system 4 of example 6, wherein the side structural elements 24 is/are arranged adjacent to each of the battery cells 6 such that movement of the battery cells 6 along the second axis y is delimited.

**Example 8:** The energy storage system 4 of example 6, wherein the battery cells 6 of the first group 18 and the second group 20 are configured to be stacked along the second axis y, and wherein the side structural elements 24 is/are arranged adjacent to the first group 18 and/or the second group 20 such that movement of the first group 18 and/or the second group 20 along the second axis y is delimited.

**Example 9:** The energy storage system 4 of any of examples 2-8, comprising a structural plate 14, extending in the first axis x and the second axis y and configured to support each of the plurality of battery cells 6.

**Example 10:** The energy storage system 4 of example 9, wherein the at least one structural element 22, 24 is configured to be fixed to the structural plate 14.

**Example 11:** The energy storage system 4 of any of examples 9-10, wherein the at least one structural element 22, 24 is integrally formed with the structural plate 14.

**Example 12:** The energy storage system 4 of any of examples 9-11, wherein the structural plate 14 comprises a cooling plate 14 configured to be in thermal communication with the plurality of battery cells 6.

**Example 13:** The energy storage system 4 of example 12, wherein a thermally conductive material is applied between the cooling plate 14 and the plurality of battery cells 6.

**Example 14:** The energy storage system 4 of any of the preceding examples, wherein the battery cells 6 comprise prismatic battery cells 6.

**Example 15:** The energy storage system 4 of any of the preceding examples, wherein the battery terminals 12 are electrically coupled by welding.

**Example 16:** The energy storage system 4 of any of the preceding examples, wherein the battery terminals 12 of the first sides 8 of the battery cells 6 of the first group 18 and/or the battery terminals 12 of the second sides 10 of the battery cells 6 of the second group 20 comprise an electrically conductive ribbon 26, configured to extend in the first axis x.

**Example 17:** The energy storage system 4 of any of the preceding examples, wherein the battery terminals 12 of the first side 8 of the battery cells 6 of the first group 18 and the battery terminals 12 of the second side 10 of the battery cells 6 of the second group 20 are configured to be connected via at least one bus bar 28.

**Example 18:** The energy storage system 4 of any of examples 1-16, wherein the battery terminals 12 of the first sides 8 of the battery cells 6 of the first group 18 and the battery terminals 12 of the second sides 10 of the battery cells 6 of the second group 20 are configured to abut.

**Example 19:** The energy storage system 4 of any of the preceding examples, wherein the second side 10 of the battery cells 6 of the first group 18 and the first side 8 of the battery cells 6 of the second group 20 comprise vents 30.

**Example 20:** The energy storage system 4 of any of the preceding examples, further comprising a third group 32 of battery cells 6, comprising a plurality of battery cells 6 stacked along the second axis y such that the central axes c of each of the battery cells 6 is parallel with the first axis x, wherein the third group 32 is arranged such that each of the first sides 8 of the battery cells 6 of the second group 20 faces one of the second sides 10 of the battery cells 6 of the third group 32, and wherein the battery terminals 12 of the facing sides are configured to be electrically coupled.

**Example 21:** A vehicle 2 comprising the energy storage system 4 according to any of examples 1-20.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (4) comprising a plurality of battery cells (6), wherein said battery cells (6) each comprise a first side (8) and a second side (10) opposite to said first side (8), wherein each of said first side (8) and said second side (10) comprises a battery terminal (12), and wherein said battery cells (6) extend along a central axis (c) extending between said first side (8) and said second side (10), said energy storage system (4) having a first extension along a first axis (x), a second extension along a second axis (y) and a third extension along a third axis (z), said first, second and third axes (x, y, z) being perpendicular to each other, and wherein said energy storage system (4) comprises a first group (18) of battery cells (6) and a second group (20) of battery cells (6), each comprising a plurality of battery cells (6) arranged along the second axis (y) such that the central axes (c) of each of said battery cells (6) is parallel with said first axis (x), wherein said first group (18) and said second group (20) are arranged such that each of the first sides (8) of the battery cells (6) of said first group (18) faces one of the second sides (10) of the battery cells (6) of said second group (20), and wherein the battery terminals (12) of said facing sides are configured to be electrically coupled.

2. The energy storage system (4) of claim 1, comprising at least one structural element (22, 24) configured to abut with at least one of said battery cells (6).

3. The energy storage system (4) of claim 2, wherein the at least one structural element (22, 24) comprises at least one central structural element (22) configured to extend at least partially between said first group (18) and said second group (20), and to abut with at least one of said battery cells (6), such that movement of at least one of said battery cells (6) along said first axis (x) is delimited.

4. The energy storage system (4) of claim 3, wherein the central structural element(s) (22) is/are configured to extend between at least one battery cell (6) of said first group (18) and at least one battery cell (6) of said second group (20) such that movement of said at least one battery cell (6) of said first group (18) and said at least one battery cell (6) of said second group (20) along said first axis (x) is delimited.

5. The energy storage system (4) of any of claims 3-4, wherein the central structural element(s) is/are configured to abut with at least one of said battery cells (6) of said first group (18) and/or said second group (20) such that movement of each of said battery cells (6) of said first group (18) and/or said second group (20) is constrained along said first axis (x).

6. The energy storage system (4) of any of claims 2-5, wherein the at least one structural element (22, 24) comprises at least one side structural element (24) configured to abut at least one of said battery cells (6) such that movement of said at least one battery cell (6) is constrained along said second axis (y).

7. The energy storage system (4) of claim 6, wherein the side structural element(s) (24) is/are arranged adjacent to each of said battery cells (6) such that movement of said battery cells (6) along said second axis (y) is delimited.

8. The energy storage system (4) of claim 6, wherein the battery cells (6) of said first group (18) and said second group (20) are configured to be stacked along the second axis (y), and wherein said side structural element(s) (24) is/are arranged adjacent to said first group (18) and/or said second group (20) such that movement of said first group (18) and/or said second group (20) along said second axis (y) is delimited.

9. The energy storage system (4) of any of claims 2-8, comprising a structural plate (14), extending in said first axis (x) and said second axis (y) and configured to support each of said plurality of battery cells (6).

10. The energy storage system (4) of claim 9, wherein the at least one structural element (22, 24) is configured to be fixed to said structural plate (14).

11. The energy storage system (4) of any of claims 9-10, wherein the at least one structural element (22, 24) is integrally formed with said structural plate (14).

12. The energy storage system (4) of any of the preceding claims, wherein the battery terminals (12) are electrically coupled by welding.

13. The energy storage system (4) of any of the preceding claims, wherein the battery terminals (12) of the first sides (8) of the battery cells (6) of said first group (18) and/or the battery terminals (12) of the second sides (10) of the battery cells (6) of said second group (20) comprise an electrically conductive ribbon (26), configured to extend in said first axis (x).

14. The energy storage system (4) of any of the preceding claims, further comprising a third group (32) of battery cells (6), comprising a plurality of battery cells (6) stacked along the second axis (y) such that the central axes (c) of each of said battery cells (6) is parallel with said first axis (x), wherein said third group (32) is arranged such that each of the first sides (8) of the battery cells (6) of said second group (20) faces one of the second sides (10) of the battery cells (6) of said third group (32), and wherein the battery terminals (12) of said facing sides are configured to be electrically coupled.

15. A vehicle (2) comprising the energy storage system (4) according to any of claims 1-14.
